# FASCICULE DE BREVET EUROPEEN

(11) **EP 0 586 292 B1**
(45) Date de publication et mention de la délivrance du brevet: **05.11.1997**
(21) Numéro de dépôt: 93402114.8
(22) Date de dépôt: 30.08.1993
(51) Int. Cl.: G02C 1/06

(54) **Monture de lunettes**
Brillenfassung
Spectacle frame

(30) Priorité: 04.09.1992 FR 9210561
(43) Date de publication de la demande: 09.03.1994
(73) Titulaire: ESSILOR INTERNATIONAL Compagnie Générale d'Optique, F-94028 Créteil Cédex (FR)
(72) Inventeur: Danloup, André, F-94500 Champigny sur Marne (FR); Hubin, Claude, F-55300 Saint Mihiel (FR)
(74) Mandataire: CABINET BONNET-THIRION

(56) Documents cités:
- EP-A- 0 061 002
- EP-A- 0 312 465
- DE-A- 2 528 967
- FR-A- 1 551 484
- FR-A- 2 112 803
- GB-A- 2 061 549
- US-A- 1 600 605
- US-A- 3 829 201

## Description

La présente invention concerne d'une manière générale les montures de lunettes et elle vise plus particulièrement celles dont les cercles ou entourages sont au moins localement en matériau relativement rigide tel que par exemple un métal ou un alliage.

Il est usuel dans ce cas de conférer globalement, en section transversale, à ces cercles ou entourages, sur une portion au moins de leur longueur, pour le maintien des verres, qu'il s'agisse de verres minéraux ou qu'il s'agisse de verres organiques, un profil en U à partie médiane et ailes latérales.

C'est le cas par exemple dans le brevet français No 1 281 449.

Les montures de lunettes métalliques correspondantes ont l'avantage d'une grande finesse, l'épaisseur extérieure hors tout de leur partie apparente, c'est-à-dire celle de leurs cercles ou entourages, pouvant avantageusement être relativement réduite en raison même de la rigidité du matériau constitutif de ceux-ci.

Mais que ces cercles ou entourages soient complets, c'est-à-dire qu'ils soient ainsi en matériau relativement rigide sur la totalité de leur longueur, en se refermant par un barillet sur les verres qu'ils enserrent, ou qu'ils ne soient que partiels, c'est-à-dire que seule une portion de leur longueur soit ainsi en matériau relativement rigide à la partie supérieure ou inférieure des verres, en se complétant par un fil en métal ou en matière synthétique à la partie inférieure ou supérieure de ceux-ci, le problème se pose d'une bonne adéquation des verres au contour de leur portion en matériau relativement rigide.

A défaut d'une telle adéquation, il y a le risque soit d'un maintien insuffisant des verres, ce qui peut conduire à une rotation intempestive de ceux-ci, voire même à leur perte, soit d'un serrage au moins localement trop accentué de ces verres, ce qui peut conduire à leur endommagement, et par exemple à leur écaillage.

Pour pallier un tel risque, il a été proposé de longue date d'associer à chacun des cercles ou entourages une bande en matériau relativement souple, qui, destinée à intervenir radialement entre un tel cercle ou entourage et le verre concerné, sur la tranche de celui-ci, permet avantageusement d'éviter tout contact entre ce verre et ce cercle ou entourage.

C'est le cas, par exemple, dans le brevet français No 1 551 484, dans le brevet français qui, déposé sous le No 80 21635, a été publié sous le No 2 467 417, et dans le certificat d'addition français qui, déposé sous le No 70 40368, a été publié sous le No 2 112 803.

Pour la retenue de la bande en matériau relativement souple ainsi mise en oeuvre, une complémentarité de formes est prévue entre elle et le cercle ou entourage auquel elle est associée.

En pratique, cela conduit à ce jour à un amincissement au moins local de la partie médiane du profil en U d'un tel cercle ou entourage, pour la formation à cet endroit d'une rainure dans laquelle s'engage de manière complémentaire une nervure prévue à cet effet sur la bande en matériau relativement souple, et tel est le cas dans les brevets français Nos 1 551 484 et 2 467 417 mentionnés ci-dessus.

Tel est aussi le cas dans le certificat d'addition français No 2 112 803 également mentionné ci-dessus, dans lequel, de surcroît, la rainure débouche latéralement d'un côté sur tout son périmètre dans l'une des formes de réalisation représentées.

Ainsi aminci, et donc affaibli, dans sa partie médiane, le profil en U d'un tel cercle ou entourage peut avoir intempestivement tendance à s'ouvrir à la manière d'une charnière, en raison par exemple des sollicitations dont sont l'objet ses ailes latérales, ces sollicitations n'étant pas nécessairement identiques de l'une à l'autre de celles-ci.

Comme précédemment, il peut en résulter un maintien insuffisant des verres, voire même la perte de ceux-ci.

Certes, dans le certificat d'addition français No 2 112 803, la section transversale du profil en U d'un cercle ou entourage présente, dans sa zone médiane, du fait d'un arrondi transversal assez naturel de la surface externe de ce cercle ou entourage, une épaisseur renforcée, mais sans qu'il puisse en résulter une compensation de l'affaiblissement dû à la rainure interne.

La présente invention a d'une manière générale pour objet une disposition permettant d'éviter un tel affaiblissement.

De manière plus précise, elle a pour objet une monture de lunettes du genre dont les cercles ou entourages sont au moins localement en matériau relativement rigide et ont, globalement, en section transversale, sur une portion au moins de leur longueur, un profil en U à partie médiane et ailes latérales, avec, associée à chacun de ces cercles ou entourages, une bande en matériau relativement souple destinée à intervenir entre eux et les verres concernés, la partie médiane du profil des cercles ou entourages présentant dans sa zone médiane une épaisseur renforcée, c'est-à-dire une épaisseur supérieure à son épaisseur à ses extrémités, cette monture de lunettes étant d'une manière générale caractérisée en ce que, en section transversale, la surface interne de la partie médiane du profil des cercles ou entourages est globalement convexe.

Du fait de son épaisseur renforcée, ce profil n'a avantageusement pas tendance à s'ouvrir.

Préférentiellement, l'épaisseur ainsi renforcée de la partie médiane de ce profil dans sa zone médiane est au moins égale à 0,5 fois l'épaisseur extérieure hors tout des cercles ou entourages, en étant par exemple supérieure à 0,6 fois cette épaisseur extérieure hors tout.

Mais il n'en apparaît évidemment rien de l'extérieur.

Ainsi le renforcement suivant l'invention de la partie médiane du profil des cercles ou entourages ne se fait avantageusement pas au détriment de l'apparence extérieure de ceux-ci.

Autrement dit, la disposition suivant l'invention permet avantageusement de concilier la finesse recherchée pour ces cercles ou entourages et un maintien correct des verres.

Les caractéristiques et avantages de l'invention ressortiront d'ailleurs de la description qui va suivre, à titre d'exemple, en référence aux dessins schématiques annexés sur lesquels :
la figure 1 est, avec un arrachement local, une vue partielle en perspective d'une monture de lunettes suivant l'invention ;
la figure 2 reprend, à échelle supérieure, le détail de la figure 1 repéré par un encart II sur cette figure 1 ;
la figure 3 est, à échelle encore supérieure, une vue partielle en coupe transversale de la monture de lunettes suivant l'invention, suivant la ligne III-III de la figure 1 ;
la figure 4 est une vue partielle en perspective analogue à celle de la figure 1, pour un autre type de monture de lunettes.

Ainsi qu'on le sait, une monture de lunettes comporte, globalement, deux cercles ou entourages 10, qui, du côté nasal, sont reliés l'un à l'autre par un pontet médian 11, et à chacun desquels est articulée, du côté temporal, une branche latérale 12.

L'invention vise plus particulièrement le cas où les cercles ou entourages 10, dont un seul est représenté sur les figures, sont au moins localement en matériau relativement rigide, et par exemple en métal ou en alliage métallique.

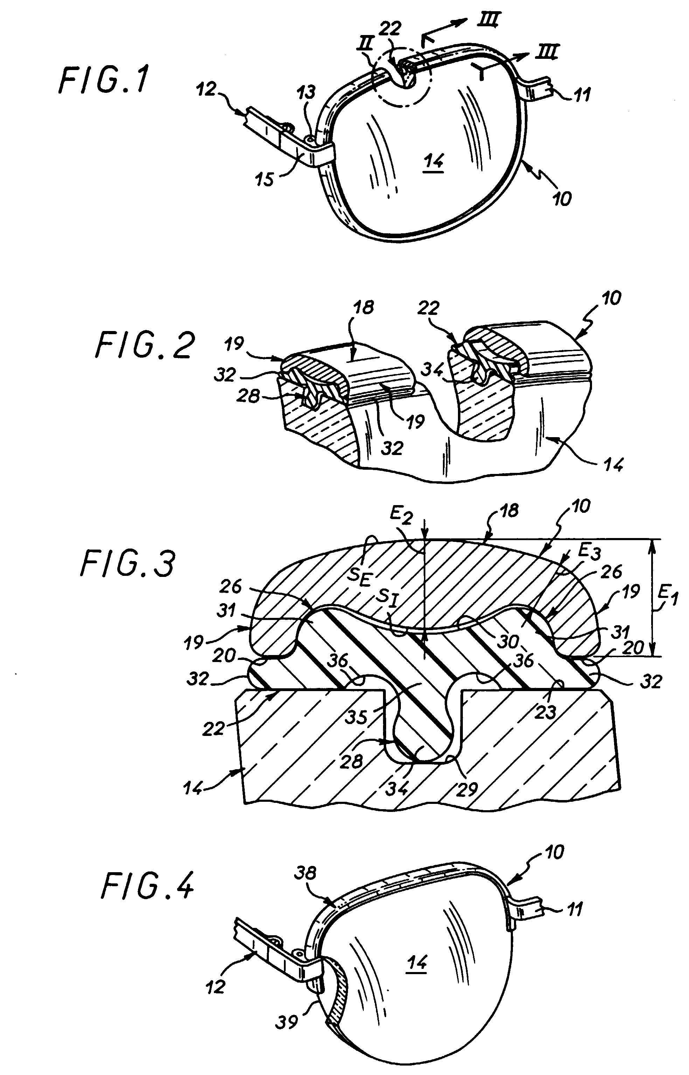

Dans la forme de réalisation plus particulièrement représentée sur les figures 1 à 3, les cercles ou entourages 10 sont complets.

Autrement dit, ils sont continûment en matériau relativement rigide sur la totalité de leur longueur, en se refermant par un barillet 13 sur les verres 14 qu'ils enserrent, au niveau du tenon 15 par l'intermédiaire duquel leur est articulée une branche latérale 12.

Les dispositions correspondantes sont bien connues par elles-mêmes, et, ne relevant pas de la présente invention, elles ne seront pas décrites plus en détail ici.

De manière également connue en soi, et ainsi qu'il est mieux visible sur la figure 3, les cercles ou entourages 10 ont, globalement, en section transversale, sur une portion au moins de leur longueur, et en pratique sur la totalité de celle-ci, un profil en U à partie médiane 18 et ailes latérales 19.

Dans la forme de réalisation représentée, la surface externe S_{E} de la partie médiane 18 est, en section transversale, globalement convexe, et elle se raccorde par de larges arrondis avec celle des ailes latérales 19.

Soit E₁ l'épaisseur extérieure hors tout des cercles ou entourages 10, mesurée entre la zone sommitale de la surface externe S_{E} de leur partie médiane 18 et la tranche 20 de leurs ailes latérales 19.

Il s'agit en pratique de la hauteur que présentent les cercles ou entourages 10 vus en élévation, et donc de la hauteur à leur endroit de la partie apparente de la monture de lunettes concernée.

En pratique, également, les cercles ou entourages 10 sont constitués par un profil dûment conformé suivant un contour déterminé.

De manière connue en soi, enfin, il est associé, à chacun des cercles ou entourages 10, sur une portion au moins de leur longueur, et en pratique sur la totalité de celle-ci, une bande 22 qui, réalisée en matériau relativement souple, est destinée à intervenir radialement entre eux et les verres 14, sur la tranche 23 de ceux-ci.

Par exemple, cette bande 22, qui se présente elle-même sous la forme d'un profilé, est en polypropylène ou en polyamide.

Préférentiellement, en tout cas, son matériau constitutif n'est pas susceptible de fluage.

La bande 22 ainsi mise en oeuvre évite avantageusement tout contact direct entre les cercles ou entourages 10 et les verres 14 tout en assurant un maintien convenable de ces verres 14 par rapport à ces cercles ou entourages 10.

Suivant l'invention, la surface interne S_{I} de la partie médiane 18 du profil des cercles ou entourages 10 est, en section transversale, globalement convexe, en sorte que cette partie médiane 18 présente, dans sa zone médiane, une épaisseur E₂ renforcée, cette épaisseur E₂ étant supérieure à son épaisseur E₃ à ses extrémités, c'est-à-dire à son raccordement avec les ailes latérales 19.

Préférentiellement, et tel que représenté, l'épaisseur E₂ de la partie médiane 18 est au moins égale à 0,5 fois l'épaisseur extérieure hors tout E₁.

Par exemple, elle est supérieure à 0,6 fois cette épaisseur extérieure hors tout E₁.

Dans la forme de réalisation représentée, elle est sensiblement égale à 0,75 fois celle-ci.

En pratique, elle est globalement arrondie, et elle se raccorde par de larges arrondis à la surface interne des ailes latérales 19 qui l'encadrent.

Dans la forme de réalisation représentée, la bande 22 a, conjointement, en section transversale, un profil en T, avec des bras latéraux 26, qui sont engagés entre les ailes latérales 19 du profil des cercles ou entourages 10, et un jambage médian 28, qui est destiné à venir en prise avec une rainure 29 prévue en correspondance à cet effet sur la tranche 23 des verres 14.

En section transversale, les bras latéraux 26 de la bande 22 présentent globalement une complémentarité de formes avec la partie médiane 18 du profil des cercles ou entourages 10.

Ils forment donc conjointement, au droit du jambage médian 28, une dépression 30, à l'image du renflement que forme à cet endroit la partie médiane 18 du profil des cercles ou entourages 10, et, à leurs extrémités, ils présentent eux-mêmes chacun un renflement 31, à l'image des larges arrondis par lesquels cette partie médiane 18 se relie aux ailes latérales 19 qui l'encadrent.

Dans la forme de réalisation représentée, les bras latéraux 26 de la bande 22 présentent, chacun respectivement, en section transversale, à leurs extrémités, des prolongements 32 par lesquels ils s'engagent sous la tranche 20 des ailes latérales 19 du profil des cercles ou entourages 10, jusqu'à venir à niveau avec la surface externe de ces ailes latérales 19.

Ces prolongements 32, qui ne sont pas indispensables, comblent avantageusement l'espace entre la tranche 20 des ailes latérales 19 du profil des cercles ou entourages 10 et les verres 14.

Ils constituent alors la seule partie de la bande 22 visible de l'extérieur.

Dans la forme de réalisation représentée, le jambage médian 28 de la bande 22 est, en section transversale, plus large à son extrémité libre 34 qu'à sa racine 35, suivant un contour largement arrondi lui conférant globalement un profil en tétine.

Enfin, dans la forme de réalisation représentée, la bande 22 présente, en section transversale, entre son jambage médian 28 et ses bras latéraux 26, à la racine de ce jambage médian 28, des décrochements 36 eux-mêmes largement arrondis.

Pour le contournement des arêtes de la rainure 29 des verres 14, elle est ainsi avantageusement à même de se satisfaire d'éventuelles tolérances de fabrication.

La figure 4 illustre l'application de l'invention au cas où seule une portion 38, formant galerie, des cercles ou entourages 10 est en matériau relativement rigide, ces cercles ou entourages 10 se complétant par un fil 39 établi de l'une à l'autre des extrémités de cette portion 38 formant galerie.

En pratique, cette portion 38 formant galerie des cercles ou entourages 10 s'étend à la partie supérieure des verres 14, tandis que le fil 39 s'étend à la partie inférieure de ceux-ci.

Les dispositions correspondantes sont bien connues par elles-mêmes, et, ne relevant pas de la présente invention, elles ne seront pas décrites plus en détail ici.

Suivant l'invention, il est associé une bande 22 à la portion 38, formant galerie, des cercles ou entourages 10.

Dans l'un et l'autre cas, la bande 22 est solidaire des cercles ou entourages 10, et les verres 14 en sont solidaires.

C'est donc au moins pour partie par son intermédiaire que le maintien des verres 14 est assuré.

Bien entendu, la présente invention ne se limite pas aux formes de réalisation décrites et représentées, mais englobe toute variante d'exécution.

En particulier, au lieu d'être solidaire par une complémentarité de formes des cercles ou entourages la bande en matériau relativement souple mise en oeuvre pourrait tout aussi bien en être solidaire par tout autre moyen et par exemple par une liaison adhésive.

En outre, la solidarisation correspondante peut être temporaire ou définitive.

Enfin si, dans la forme de réalisation plus particulièrement décrite et représentée, il existe latéralement un certain jeu entre le jambage médian de la bande en matériau relativement souple mise en oeuvre et les flancs de la rainure des verres dans laquelle ce jambage médian est engagé, ce jeu peut évidemment être supprimé.

Il en est d'ailleurs en pratique ainsi lorsque, sous l'effet du serrage, ce jambage médian se trouve comprimé.

Dans ce cas, le jeu initialement présent n'est prévu que pour faciliter le montage correspondant.

## Revendications

1. Monture de lunettes du genre dont les cercles ou entourages (10), sont au moins localement en matériau relativement rigide, et ont, globalement, en section transversale, sur une portion au moins de leur longueur, un profil en U à partie médiane (18) et ailes latérales (19), avec, associée à chacun de ces cercles ou entourages (10), une bande (22) en matériau relativement souple destinée à intervenir entre eux et les verres (14) concernés, la partie médiane (18) du profil des cercles ou entourages (10) présentant dans sa zone médiane une épaisseur (E₂) renforcée, c'est-à-dire une épaisseur (E₂) supérieure à son épaisseur (E₃) à ses extrémités, caractérisée en ce que, en section transversale, la surface interne (S_{I}) de la partie médiane (18) du profil des cercles ou entourages (10) est globalement convexe.

2. Monture de lunettes suivant la revendication 1, caractérisée en ce que, en section transversale, la surface interne (S_{I}) de la partie médiane (18) du profil des cercles ou entourages (10) est globalement arrondie.

3. Monture de lunettes suivant la revendication 2, caractérisée en ce que, en section transversale, la surface interne (S_{I}) de la partie médiane (18) du profil des cercles ou entourages (10) se raccorde par de larges arrondis à celle des ailes latérales (19) qui l'encadrent.

4. Monture de lunettes suivant l'une quelconque des revendications 1 à 3, caractérisée en ce que l'épaisseur (E₂), dans sa zone médiane, de la partie médiane (18) du profil des cercles ou entourages (10) est au moins égale à 0,5 fois l'épaisseur extérieure hors tout (E₁) de ces cercles ou entourages (10).

5. Monture de lunettes suivant la revendication 4, caractérisée en ce que l'épaisseur (E₂), dans sa zone médiane, de la partie médiane (18) du profil des cercles ou entourages (10) est supérieure à 0,6 fois l'épaisseur extérieure hors tout (E₁) de ces cercles ou entourages (10).

6. Monture de lunettes suivant l'une quelconque des revendications 1 à 5, caractérisée en ce que, en section transversale, la bande (22) en matériau relativement souple a un profil en T, avec des bras latéraux (26) qui sont engagés entre les ailes latérales (19) du profil des cercles ou entourages (10) concernés et un jambage médian (28) qui est destiné à venir en prise avec une rainure (29) prévue en correspondance à cet effet sur la tranche (23) du verre (14) correspondant.

7. Monture de lunettes suivant la revendication 6, caractérisée en ce que, en section transversale, les bras latéraux (26) de la bande (22) en matériau relativement souple présentent globalement une complémentarité de formes avec la partie médiane (18) du profil des cercles ou entourages (10).

8. Monture de lunettes suivant l'une quelconque des revendications 6, 7, caractérisée en ce que, en section transversale, les bras latéraux (26) de la bande (22) en matériau relativement souple présentent à leurs extrémités des prolongements (32) par lesquels ils s'engagent sous la tranche (20) des ailes latérales (19) du profil des cercles ou entourages (10).

9. Monture de lunettes suivant l'une quelconque des revendications 6 à 8, caractérisée en ce que, en section transversale, le jambage médian (28) de la bande (22) en matériau relativement souple est plus large à son extrémité libre (34) qu'à sa racine (35).

10. Monture de lunettes suivant l'une quelconque des revendications 6 à 9, caractérisée en ce que, en section transversale, la bande (22) en matériau relativement souple présente des décrochements (36) largement arrondis au raccordement entre son jambage médian (28) et ses bras latéraux (26).

## Patentansprüche

1. Brillengestell des Types, von dem die Kreise oder Fassungen (10) zumindest lokal aus einem relativ steifen Material gebildet sind und global im Querschnitt an zumindest einem Abschnitt der Länge ein U-Profil aufweisen mit einem mittleren Abschnitt (18) und Lateralflügeln (19), mit zugeordnet jedem der Kreise oder Fassungen (10) einem Band (22) aus einem relativ weichen Material, vorgesehen, um zwischen ihnen und den betroffenen Gläsern (14) angeordnet zu werden, wobei der mittlere Abschnitt (18) des Profiles der Kreise oder Fassungen (10) an der mittleren Zone eine verstärkte Dicke (E₂) aufweist, d.h. eine Dicke (E₂), welche größer ist als die Dicke (E₃) an den Enden,
**dadurch gekennzeichnet,** daß im Querschnitt die innere Fläche (S_{I}) des mittleren Abschnittes (18) des Profiles der Kreise oder Fassungen (10) global konvex verläuft.

2. Brillengestell nach Anspruch 1,
**dadurch gekennzeichnet,** daß im Querschnitt die innere Fläche (S_{I}) des mittleren Abschnittes (18) des Profiles der Kreise oder Fassungen (10) global abgerundet ist.

3. Brillengestell nach Anspruch 2,
**dadurch gekennzeichnet,** daß im Querschnitt die innere Fläche (S_{I}) des mittleren Abschnittes (18) des Profiles der Kreise oder Fassungen (10) sich über große Abrundungen an jene der Lateralflügel (19) anschließt, welche sie umgeben.

4. Brillengestell nach einem der Ansprüche 1 bis 3,
**dadurch gekennzeichnet,** daß die Dicke (E₂) an der mittleren Zone des mittleren Abschnittes (18) des Profiles der Kreise oder Fassungen (10) zumindest gleich einem 0,5-Fachen der äußeren Gesamtdicke (E₁) der Kreise oder Fassungen (10) entspricht.

5. Brillengestell nach Anspruch 4,
**dadurch gekennzeichnet,** daß die Dicke (E₂) an der mittleren Zone des mittleren Abschnittes (18) des Profiles der Kreise oder Fassungen (10) größer ist als das 0,6-Fache der äußeren Gesamtdicke (E₁) der Kreise oder Fassungen (10).

6. Brillengestell nach einem der Ansprüche 1 bis 5,
**dadurch gekennzeichnet,** daß im Querschnitt das Band (22) aus relativ weichem Material ein T-Profil aufweist mit Lateralästen (26), welche eingegriffen sind zwischen den Lateralflügeln (19) des Profiles der betroffenen Kreise oder Fassungen (10), sowie einer mittleren Basis (28), welche vorgesehen ist, in Eingriff zu treten mit einer Rille (29), entsprechend vorgesehen zu diesem Zweck an dem entsprechenden Rand (23) des Glases (14).

7. Brillengestell nach Anspruch 6,
**dadurch gekennzeichnet,** daß im Querschnitt die Lateraläste (26) des Bandes (22) aus relativ weichem Material global eine Formenkomplementarität mit dem mittleren Abschnitt (18) des Profiles der Kreise oder Fassungen (10) aufweist.

8. Brillengestell nach einem der Ansprüche 6, 7,
**dadurch gekennzeichnet,** daß im Querschnitt die Lateraläste (26) des Bandes (22) aus relativ weichem Material an ihren Enden Fortsätze (32) aufweisen, mittels welchen sie unter den Rand (20) der Lateralflügel (19) des Profiles der Kreise oder Fassungen (10) eingreifen.

9. Brillengestell nach einem der Ansprüche 6 bis 8,
**dadurch gekennzeichnet,** daß im Querschnitt die mittlere Basis (28) des Bandes (22) aus relativ weichem Material größer ist an dem freien Ende (34) als an der Wurzel (35).

10. Brillengestell nach einem der Ansprüche 6 bis 9,
**dadurch gekennzeichnet,** daß im Querschnitt das Band (22) aus relativ weichem Material Aussparungen (36) aufweist, welche stark abgerundet sind am Übergang zwischen der mittleren Basis (28) und den Lateralästen (26).

## Claims

1. A spectacles frame of the kind in which the rims or lens mountings (10) are at least locally of relatively rigid material and have overall in cross-section over a portion at least of their length a U-shaped profile with a central part (18) and side limbs (19), with, associated with each of said rims or lens mountings (10), a strip (22) of relatively flexible material intended to be operatively disposed between them and the lenses (14) in question, the central part (18) of the profile of the rims or lens mountings (10) being in its central zone of an increased thickness (E₂), that is to say a thickness (E₂) which is greater than its thickness (E₃) at its ends, characterised in that in cross-section the internal surface (S_{I}) of the central part (18) of the profile of the rims or lens mountings (10) is overall convex.

2. A spectacles frame according to claim 1 characterised in that in cross-section the internal surface (S_{I}) of the central part (18) of the profile of the rims or lens mountings (10) is overall rounded.

3. A spectacles frame according to claim 2 characterised in that in cross-section the internal surface (S_{I}) of the central part (18) of the profile of the rims or lens mountings (10) is connected by wide rounded portions to the surface of the side limbs (19) which flank it.

4. A spectacles frame according to any one of claims 1 to 3 characterised in that the thickness (E₂), in its central zone, of the central part (18) of the profile of the rims or lens mountings (10) is at least equal to 0.5 times the external overall thickness (E₁) of said rims or lens mountings (10).

5. A spectacles frame according to claim 4 characterised in that the thickness (E₂), in its central zone, of the central part (18) of the profile of the rims or lens mountings (10) is greater than 0.6 times the external overall thickness (E₁) of said rims or lens mountings (10).

6. A spectacles frame according to any one of claims 1 to 5 characterised in that in cross-section the strip (22) of relatively flexible material is of a T-shaped profile with side arms (26) which are engaged between the side limbs (19) of the profile of the rims or lens mountings (10) in question and a central leg portion (28) which is intended to come into engagement with a groove (29) provided at a corresponding position for that purpose in the edge (23) of the corresponding lens (14).

7. A spectacles frame according to claim 6 characterised in that in cross-section the side arms (26) of the strip (22) of relatively flexible material are overall complementary in respect of shapes with the central part (18) of the profile of the rims or lens mountings (10).

8. A spectacles frame according to either one of claims 6 and 7 characterised in that in cross-section the side arms (26) of the strip (22) of relatively flexible material have at their ends extension portions (32) by means of which they engage under the edge (20) of the side limbs (19) of the profile of the rims or lens mountings (10).

9. A spectacles frame according to any one of claims 6 to 8 characterised in that in cross-section the central leg portion (28) of the strip (22) of relatively flexible material is wider at its free end (34) than at its root (35).

10. A spectacles frame according to any one of claims 6 to 9 characterised in that in cross-section the strip (22) of relatively flexible material has widely rounded recesses (36) at the connection between its central leg portion (22) and its side arms (26).
